# EUROPEAN PATENT SPECIFICATION

(11) **EP 1 486 704 B1**
(45) Date of publication and mention of the grant of the patent: **26.04.2006**
(21) Application number: 03013261.7
(22) Date of filing: 12.06.2003
(51) Int. Cl.: F16H 61/28, F16H 63/20, F16H 63/30, F16H 63/34

(54) **Shifting device**
Getriebeschalteinrichtung
Dispositif de passage des vitesses

(43) Date of publication of application: 15.12.2004
(73) Proprietor: HOERBIGER Antriebstechnik GmbH, 86956 Schongau (DE)
(72) Inventor: De Mazière, Filip, 9070 Heusden-Destelbergen (BE)
(74) Representative: Schmitz, Hans-Werner

(56) References cited:
- DE-A- 10 119 343
- DE-C- 952 600
- US-A- 1 283 561
- US-A- 2 577 019
- US-A- 5 481 935

## Description

The invention concerns a shifting device according to the preamble part of claim 1. Such a device is known from US-A-5 481 935. In particular the invention concerns a shifting device that is applicable on all kinds of gearboxes with synchronizers or dog clutches. Especially, the shifting device according to the present invention is perfectly suited for automated manual transmissions and double clutch transmissions.

In principle two different shifting devices are known and used with one or two shift drums and with direct activation.

A shifting device with a shift drum (e.g. US-A-1 283 561) comprises a drum with grooves in its surface that can be rotated with incremental angles. A shift fork is connected to each groove and supported by a rod.

Shifting devices with one or two drums which are adapted for DCT applications are conceptually sequential. To make a multiple downshift for instance, all intermediate gears must be passed through what consumes time.

A mechanical system with hydraulic actuators puts the shift drum in the defined angles. Either the hydraulic valve contains selector valves which direct the modulated pressure to the piston for the required up or down shift; or several proportional valves are built in which are directly activated by the electronic controller. Intermediate solutions are also possible.

Each selector valve needs time to be activated. This results in about 30 ms delay time between the electric signal and the hydraulic reaction for a selector valve and about 50 ms delay time for a proportional valve. Proportional valves are expensive so that the amount needed must be restricted.

The second system called direct activation is characterized by the fact that each fork is supported on a rod which can be moved in both axial directions by means of one bi-directional piston or two pistons. The hydraulic valve contains selector valves to direct the pressure to the piston or pistons which must be activated. This system is non-sequential and needs a lot of hydraulic selectors or proportional valves. Hydraulic selectors need time to be activated and proportional valves are expensive.

It is therefore an object underlying the present invention to provide a shifting device according to the preamble part of claim 1 that has a simple structure, is easy to manufacture and has a reliable functioning.

The solution of this object is achieved by the features of claim 1.

In detail, the shifting device according to the present invention takes particularly the form of an electro-hydraulic-mechanical activation system for automatic gear changing with the following advantages:
- extremely short reaction time between controller output signal and synchronisation start;
- all shift forks which are not moved purposely by the actuator are mechanically locked;
- the system allows skipping gears in up and down shifts and sequential and non-sequential shifting;
- as is necessary for double clutch transmissions (DCT) the device according to the present invention is able to select all combinations of gears;
- moreover, the shifting device according to the present invention accurately transfers the controller signal into force control on the synchronizer;
- the shifting device according to the present invention has a very compact design with only a few simple components; and
- detection and correction of possible malfunction of the synchronizer or the dog clutch is possible.

The dependent claims contain advantageous embodiments of the present invention.

Concerning the functioning of the shifting device it is to be noted that, if the actuator means is not activated, each fork is locked preferably in one of three slots of the housing of the device. Each slot corresponds to one of the final positions of the corresponding synchronizer or dog clutch: shifted in one gear ratio, neutral or shifted in one other gear ratio. In this situation the shift rod can move freely without entraining any of the shift forks. By a controlled pressure on both ends of the shift rod the force on this rod or the position of same can be controlled.

When the synchronizer is to be engaged the shift rod is positioned in the neutral state. The neutral state is the position wherein the groove in the shift rod is located precisely under the midst slot of the housing of the device. Then the actuator means is activated. In this state, the locking pin of the selecting means connects the shift fork to the shift rod before it disconnects the shift fork from the slot in the housing. During this action the shift fork never has been in an uncontrolled situation. At this moment the shift fork has been disconnected from the housing and linked to the shift rod. By pressurising one of both ends of the shift rod by the shift rod moving means the shift rod is pushing on the synchronizer and engages the selected gear. At this moment the shift is already performed. While the shift rod has been moving the gear selecting means is deactivated. In the end position of the shift rod a locking spring that can preferably be provided pushes the locking pin in an outermost slot in the housing. The locking pin is preferably wide enough so that the selecting means is always in contact with the locking pin over its whole travel length. The shift rod is now released from the shift fork and can move without the shift fork back to the neutral state.

The shifting device according to the present invention can be optimized for double clutch transmissions (DCTs). The average shift of processing time, that is the time needed after a shift, and the average hydraulic energy for a shift in a double clutch transmission 6 speed can be reduced if the gears are arranged as follows: 1/4, 2/6, 3/5 or as 1/6, 2/4, 3/5 (x/y means: gear x left side of the synchronizer and gear y right side).

Mostly common with DCTs are sequential shifts. In general, sequential gears must be as much as possible at the same side of the synchronizer. If so, a sequential shift is using less oil and time than if gears are at opposite positions. In the case of a 2 to 3 upshift the shift rod is in the neutral position. The transmission is in the 2^{nd} and the neutral position. The shift rod picks up the synchronizer 3/5 and moves to the left. The 2^{nd} and 3^{rd} gears are now engaged and there is a clutch overlap. Now the transmission has been shifted to the 3^{rd} gear with a 2^{nd} gear in the stand-by condition. The shift rod picks up 2/6 and moves back to the right into the neutral position. If the 2^{nd} and the 3^{rd} gear are at opposite positions, the rod has to travel without the fork from one side to the other to pick up a fork.

This arrangement improves on average but not for all gearshifts. A shift from the 3^{rd} to the 4^{th} gear does not benefit from this arrangement.

By adding a second groove in the shift rod the number of rod moves is reduced to 2 for all the shifts, is sequential or non-sequential and independent from the gear arrangement.

The advantages of the shifting device according to the present invention are as follows:

First of all, a short reaction time can be achieved. The reaction time is here defined as the time delay between the moment that the controller or driver produces the signal to start shifting and the moment that the transmission input shaft speed starts changing due to synchronizing.

For the quality of an automated transmission it is of utmost importance that this time delay is as short as possible. This time delay is the sum of the following:
- Time until force in solenoid ramps up is zero (or less than 1 ns).
- Time to relocate locking pin is about 10 ms due to the very low masses of the moving parts.
- EH-delay (= electric to hydraulic) of proportional valves to control the pressure on the ends of the shift rod is about 50 ms.
- The pressure lines are always filled with oil at both sides so that no time is lost to pressurize them.
- Movement of the rod over the length needed for synchronization. This time can be optimized to a minimum which is independent from the choice of activation system.

The next step (the locking pin is moved back in its rest position by the spring and the shift rod moves back to the neutral position) happens after the shift and does not increase the reaction time.

The total reaction time is thus about 60 ms.

All other systems where two or more hydraulic steps are needed to accomplish a shift are slower. At least one hydraulic step must be proportional: EH-delay 50 ms. The other step (proportional or selection) lasts at least 30 ms. So, the minimum reaction time of the current systems is at least 80 ms.

The current systems are a compromise between costs and reaction time. When not optimized for reaction time these systems become even slower and remain more expensive. In the actual system with direct activation the disadvantage of cost and delay time is even more pronounced since more selector valves or more proportional valves are needed.

Concerning the locking of the shift forks it is a requirement for safety reasons that all shift forks which are not actively controlled, are kept in their position even when a heavy shock occurs.

In manual transmissions and automated manual transmissions additional mechanical systems are implemented for this purpose. In a double clutch transmission the situation is more complicated because two gears can be selected at once and all gears must remain in their position in case of a shock. Also in this application mechanical locking systems and/or detents are added.

An alternative solution is the shift drum as explained herein before. Although its application is limited to sequential gear shifting, it provides all the locking functions. In a double clutch transmission the shift drum becomes a bulky part, or it is split into 2 shift drums with their own activation system, one drum for each input shaft.

The shifting device according to the present invention has the advantage that all locking functions are conceptually built in, so that no additional costs are created for incorporating these functions.

Another advantage of the shifting device according to the present invention is the fact that a non-sequential shifting is possible. The actual shift drum system is limited to sequential shifting while the direct activation system allows non-sequential shifting.

Non-sequential shifting has the advantage that it is possible to skip gears. A typical situation is when the driver suddenly presses the throttle deep after slowing down in the highest gear. The driver expects an immediate downshift to e.g. the 2^{nd} gear. If the car has a sequential gear box the transmission will shift to all the intermediate gears before it reaches the 2^{nd} gear. These actions take time and the car behaves less dynamically. This situation becomes even worse when the reaction time is also long.

In a double clutch transmission many gear combinations are required. For example driving in the 3^{rd} gear will happen in three combinations of gear selection. 3^{rd} and 4^{th} prepared (The clutch linked to 3^{rd} is closed and the clutch for 4^{th} is open), 3^{rd} and 2^{nd} prepared and 3^{rd} with the other shaft in Neutral (clutch to 3^{rd} gear is closed and clutch to the other shaft is (clutch to 3^{rd} gear is closed and clutch to the other shaft is open or closed).

The current system with direct activation can easily deal with this but the system with shift drums gets a shift drum with a large diameter because for each gear all these combinations must be provided in the groove pattern. When a multiple down or up shift is requested, the transmission must go through all the intermediate gears with all their gear combinations which consumes a lot of time, hydraulic power and energy. Pumps and possible accumulators must be large enough for this task. An alternative for this bulky shift drum are 2 shift drums, one for each input shaft. Each drum needs only the grooving for the gears on the related shaft (being 1^{st,} 3^{rd}, 5^{th} ... and 2^{nd}, 4^{th}, 6^{th} ...). Two shift drums with their own activation system and bearings increase, of course, the costs.

From the description of the functioning of the shifting device according to the present invention it is clear that the new activation system is well suited to make all gear combinations without losing time.

In terms of accurate force control on the synchronizers the axial force on the synchronizer during activation must be controlled in order to adapt the shift behaviour to the driving conditions. The electronic controller and hydraulic system are able to provide a controlled pressure.

With the shifting device according to the present invention this pressure is almost perfectly proportionally transmitted into a force on the shift fork since the mechanical losses due to friction of the shift rod to the housing and of the shift rod in the locked shift forks are neglectable.

In the actual system with the shift drum the mechanical transfer of the controlled force contains many non-linear losses such as friction between the groove walls and the shift fork, a detent and a spring loaded mechanism to create the incremental angle increases of the shift drum. Because of those unknown losses the force on the shift fork will be less accurate.

Similar non-linear losses are created in the detent and locking device of the direct activated system.

As has already been explained herein-before, the shifting device according to the present invention provides a compact design and only a few components.

Moreover, it provides for a detection and correction of possible malfunction of the synchronizer or dog clutch. Accidentally it may happen that the blocking ring of a synchronizer is not working due to vibrations. Then the synchronizer can be engaged without having synchronized. An advantage of the shifting device according to the present invention is that such a situation can be detected easily and corrected.

The controller needs, anyhow, to know the engine speed and the transmission output speed. With one additional position sensor on the shift rod, a possible malfunction of the synchronizer is detected when the speed difference over the synchronizer is nonzero at the moment the synchronizer is passing the blocking ring.

When this problem happens the synchronizer makes lot of noise and when the activating force on the shift fork is not released, the synchronizer could be damaged. But as soon as the controller detects the malfunction, it inverses the force on the synchronizer and starts a new engagement.

On the actual activation system with a shift drum it is even not sure (and probably depending on each individual design) if the rotation of the drum can be reversed at any shift drum position. Detection and correction of a malfunction can be achieved also on the existing system with direct activation but a position sensor on each shift fork rod is needed which increases the costs significantly.

Further features and advantages of the present application will become apparent from the following description of the drawings wherein:
- Fig. 1: is a schematically simplified presentation of the overall structure of a shifting device according to the present invention,
- Fig. 2: is a simplified representation of a gear selecting unit in the locked state,
- Fig. 3: a representation corresponding to Fig. 2 of the gear selecting unit in the unlocked status, and
- Fig. 4: a simplified representation of a part of the shifting device according to Fig. 1.

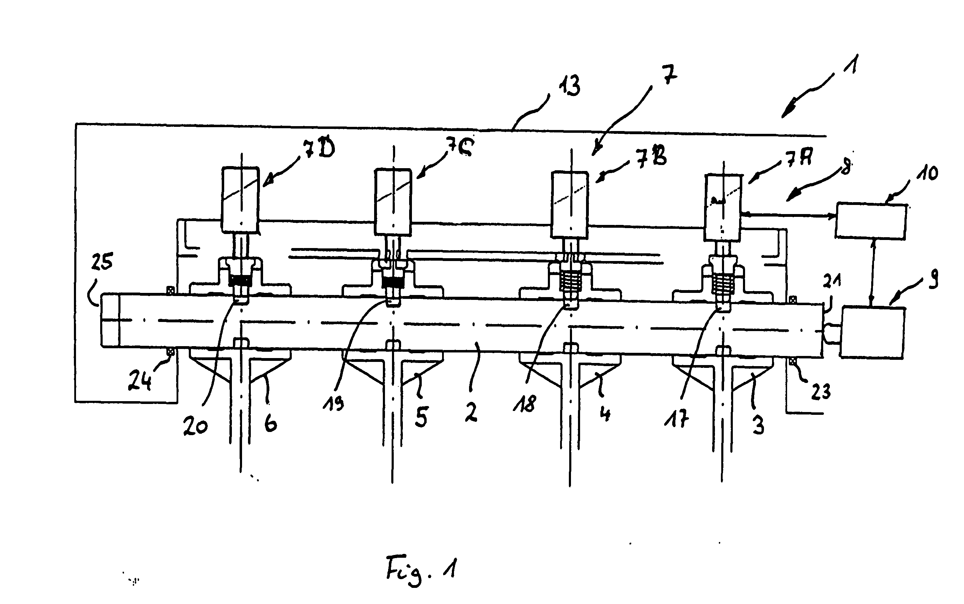

Fig. 1 shows a shifting device 1 according to the present invention comprising a housing 13 and a shift rod 2 that is supported in the housing 13 by bearings 23 and 24.

According to the preferred embodiment shown in Fig. 1 four shift forks 3 to 6 are disposed on the shift rod 2 next to each other. Each of said shift forks 3 to 6 can be selectively coupled to the shift rod 2.

Moreover, the shifting device 1 comprises an actuator means 8 for selecting the respective gear by actuating the beforementioned associated shift forks 3 to 6.

For this purpose the actuator means 7 includes a gear selecting means 7. According to the preferred embodiment shown in Fig. 1 said gear selecting means 8 includes four gear selecting units 7A, 7B, 7C, 7D that are associated to the respective shift fork 3, 4, 5 and 6, respectively.

Moreover, the shifting device 1 comprises at least one independent shift rod moving means 9 and a control means 10 controlling the action of the gear selecting means 7 and the shift rod moving means. This action will be described hereinafter.

For the sake of completeness it is to be mentioned that a bi-directional moving means 9 or also two shift rod moving means 9 can be provided co-operating with the respective front faces 21 and 25, respectively of shift rod 2.

Finally, Fig. 1 shows four grooves 17, 18, 19 and 20 being disposed in the shift rod 2 and being associated to the shift forks 3, 4, 5 and 6, respectively.

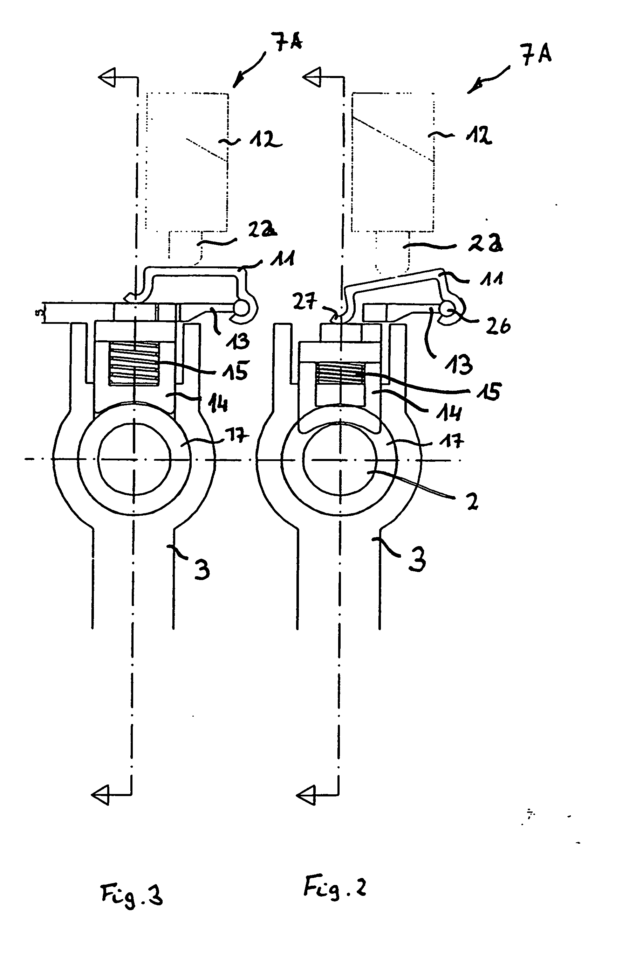

Reference is now made to Figs. 2 to 4 in order to explain the functioning of the shifting device 1 shown in Fig. 1.

Fig. 2 depicts gear selecting unit 7A that comprises an actuator 12 that can be a solenoid but also a hydraulic or a pneumatic device. The solenoid 12 that has been shown according to the preferred embodiments of Figs. 2 to 4 activates a moveable piston 22 that, in turn, acts on an actuating lever 11 that is pivotally supported in housing 13 by a suitable bearing 26.

Actuating lever 11 comprises a free end in the form of an engagement portion 27 that slidably engages a locking pin 14 that is guided in the shift fork 3 and that is biased into its unlocked position according to Fig. 3 by a spring 15 that has a lower end engaging shift fork 3 and an upper end engaging locking pin 14, as can be seen from Figs. 2 and 3.

According to Fig. 2 solenoid 12 is actuated and, consequently, moves movable piston 22 downwards. As movable piston 22 engages said actuating lever 11 same is rotated around bearing 26 and pushes locking pin 14 into groove 17 as can be seen from Fig. 2. This movement of locking pin 14 into groove 17 locks shift fork 3 to shift rod 2.

Fig. 3 shows locking pin 14 being disengaged from groove 17 by the action of spring 15 moving locking pin 14 upwards out of groove 17 in case solenoid 12 has not been actuated or switched off.

For the sake of completeness it has to be outlined that gear selecting units 7B, 7C and 7D are structured the same way as unit 7A, and work correspondingly.

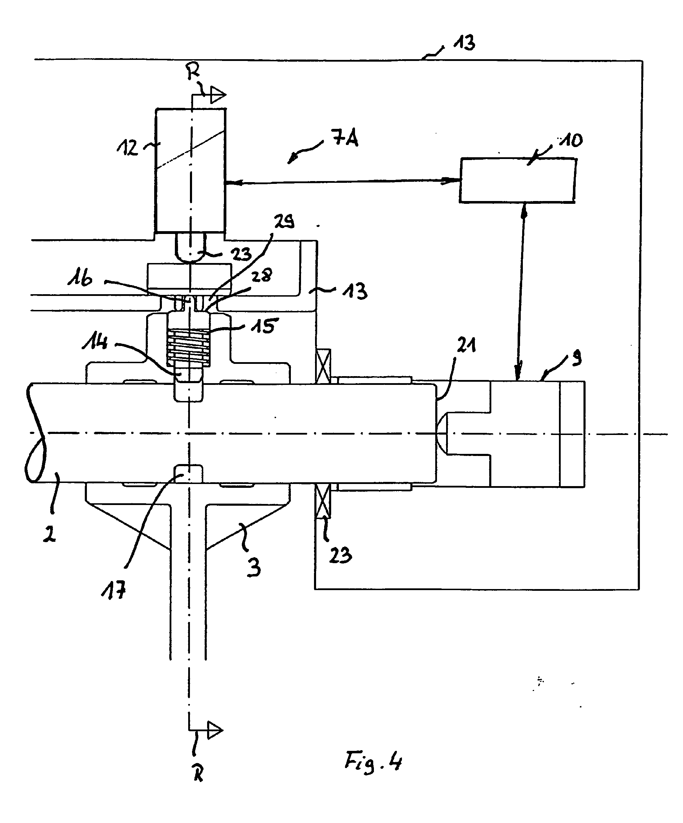

In addition to the elements depicted and explained herein-before Fig. 4 shows a projection 16 that is disposed on the upper end face 28 of locking pin 14. This projection 16 cooperates with housing 13 or an additional member disposed in housing 13 for the purpose of securing fork 3 in the engaged state. Fig. 4 shows projection 16 co-operating with housing 13 before engagement of fork 3. In case shift fork 3 is moved to the right, as shown by arrows R, locking pin 14 is pushed downwards so that projection 16 is disengaged from housing 13. After movement of fork 3 to the right according to arrows R by moving shift rod 2 in order to select a desired gear, solenoid 12 is de-energized so that spring 15 pushes locking pin 14 upwards so that projection 16 is moved into a hole 29 of housing 13 thus securing shift fork 3 in the selected gear. Needless to say, that units 7B-7D are configured accordingly. Moreover, all the actions described herein-before are suitably controlled by control means 10 shown in Figs. 1 and 4.

### List of reference signs

- 1: shifting device
- 2: shift rod
- 3-6: shift forks
- 7: gear selecting means
- 7A-7D: units
- 8: actuator means
- 9: shift rod moving means
- 10: control means
- 11: actuation lever
- 12: solenoid
- 13: housing
- 14: loading pin
- 15: spring
- 16: projection
- 17-20: grooves
- 21, 25: front face
- 22: movable piston
- 23, 24: bearings
- 26: bearing
- 27: engagement portion
- 28: upper end face
- 29: hole

## Claims

1. Shifting device (1) comprising:
- a housing (13);
- at least one shift rod (2) supported in said housing (13);
- a plurality of shift forks (3-6) that are disposed on said shift rod (2) next to each other, and that can be selectively coupled to said shift rod (2); and
- an actuator means (8) for selecting the respective gear by actuating the associated shift fork, said actuator means (8) including a gear selecting means (7) and at least one independent shift rod moving means (9); and
- a control means (10) for controlling the action of said gear selecting means (7) and said shift rod moving means (9), being **characterized by**
- an arrangement of three slots (29) disposed in the housing (13) for locking the respective shift fork (3-6) in the selected gear shifting position or the central neutral position with respect to the housing (13).

2. Shifting device according to claim 1, being **characterized in that** said gear selecting means (7) includes a plurality of gear selecting units (7A to 7D) each comprising a movable piston (23) cooperating with a pivotable actuating lever (11) actuating a locking pin (14) for coupling the respective shift fork (3 to 6) to said shift rod (2).

3. Shifting device according to claim 2, being **characterized in that** said piston (10) is actuated by a solenoid (12) or a hydraulic or a pneumatic driving means.

4. Shifting device according to claim 2 or 3, being **characterized in that** said actuating lever (11) is pivotably supported in said housing (13).

5. Shifting device according to one of claims 2 to 4, being **characterized in that** said locking pin (14) is biased by a spring (15) into the unlocked position.

6. Shifting device according to one of claims 2 to 4, being **characterized in that** each locking pin (14) comprises a projection (16) for temporarily securing the respective shift fork (3 to 6) with respect to the housing (13).

7. Shifting device according to one of claims 2 to 4, being **characterized in that** each locking pin (14) is guided in the respective shift fork (3 to 6).

8. Shifting device according to one of claims 1 to 7, being **characterized in that** said shift rod (2) comprises a plurality of grooves (17 to 20) corresponding to the number of locking pins (14) and being located such as to be adapted to co-operate with said locking pin (14).

9. Shifting device according to one of claims 1 to 8, being **characterized in that** said shift rod moving means (9) is positioned next to the front face (21) of said shift rod (2).

10. Shifting device according to one of claims 1 to 9, being **characterized in that** said shift rod moving means (9) is a solenoid, a hydraulic or a pneumatic driving means.

## Patentansprüche

1. Schaltvorrichtung (1) mit:
- einem Gehäuse (13);
- mindestens einer Schaltstange (2), die in dem Gehäuse (13) gelagert ist;
- einer Mehrzahl von Schaltgabeln (3 bis 6), die auf der Schaltstange (2) nebeneinander angeordnet sind und die selektiv mit der Schaltstange (2) verbunden werden können;
- einer Stelleinrichtung (8) für die Auswahl des entsprechenden Ganges durch Betätigen der zugeordneten Schaltgabel, wobei die Stelleinrichtung (8) eine Gangauswahleinrichtung (7) und mindestens eine unabhängige Einrichtung (9) zur Bewegung der Schaltstange aufweist; und
- einer Steuer-/Regeleinrichtung (10) zur Steuerung/Regelung der Funktion der Gangauswahleinrichtung (7) und der Einrichtung (9) zur Bewegung der Schaltstange,
**gekennzeichnet durch**
- eine Anordnung von drei Schlitzen (29), die im Gehäuse (13) zum Verriegeln der jeweiligen Schaltgabel (3 bis 6) in der gewählten Gangschaltungsposition oder der zentralen, neutralen Position relativ zum Gehäuse (13) angeordnet sind.

2. Schaltvorrichtung gemäß Anspruch 1, **dadurch gekennzeichnet, dass** die Gangauswahleinrichtung (7) eine Mehrzahl von Gangauswahleinheiten (7a bis 7d) aufweist, von denen jede einen beweglichen Kolben (23) umfasst, der mit einem drehbaren Antriebshebel (11) zusammenwirkt, der einen Verriegelungsstift (14) für die Verbindung der jeweiligen Schaltgabeln (3 bis 6) mit der Schaltstange (2) betätigt.

3. Schaltvorrichtung gemäß Anspruch 2, **dadurch gekennzeichnet, dass** der Kolben (10) durch ein Solenoid (12) oder durch eine hydraulische oder pneumatische Antriebseinrichtung betätigt wird.

4. Schaltvorrichtung gemäß Anspruch 2 oder 3, **dadurch gekennzeichnet, dass** der Antriebshebel (11) drehbar in dem Gehäuse (13) gelagert ist.

5. Schaltvorrichtung gemäß einem der Ansprüche 2 bis 4, **dadurch gekennzeichnet, dass** der Verriegelungsstift (4) durch eine Feder (15) in die nicht verriegelte Position vorgespannt ist.

6. Schaltvorrichtung gemäß einem der Ansprüche 2 bis 4, **dadurch gekennzeichnet, dass** jeder Verriegelungsstift (14) einen Fortsatz zur zeitweisen Sicherung der jeweiligen Schaltgabeln (3 bis 6) relativ zum Gehäuse (13) umfasst.

7. Schaltvorrichtung gemäß einem der Ansprüche 2 bis 4, **dadurch gekennzeichnet, dass** jeder Verriegelungsstift (14) in der entsprechenden Schaltgabel (3 bis 6) geführt ist.

8. Schaltvorrichtung gemäß einem der Ansprüche 1 bis 7, **dadurch gekennzeichnet, dass** die Schaltstange (2) eine Mehrzahl von Nuten (17 bis 20), entsprechend der Anzahl von Verriegelungsstiften (14) umfasst, die so angeordnet sind, dass sie geeignet sind, mit den Verriegelungsstiften (14) zusammenzuwirken.

9. Schaltvorrichtung gemäß einem der Ansprüche 1 bis 8, **dadurch gekennzeichnet, dass** die Einrichtung (9) zur Bewegung der Schaltstange neben der Stirnfläche (21) der Schaltstange (2) angeordnet ist.

10. Schaltvorrichtung gemäß einem der Ansprüche 1 bis 9, **dadurch gekennzeichnet, dass** die Einrichtung (9) zur Bewegung der Schaltstange ein Solenoid oder eine hydraulische oder eine pneumatische Antriebseinrichtung ist.

## Revendications

1. Dispositif de changement de vitesse (1) comprenant :
- un carter (13),
- au moins une tige de changement de vitesse (2) supportée dans ledit carter (13),
- une pluralité de fourchettes de boîte (3 à 6) qui sont placées sur ladite tige de changement de vitesse (2) à proximité les unes des autres et qui peuvent être accouplées sélectivement à ladite tige de changement de vitesse (2), et
- un moyen formant actionneur (8) destiné à sélectionner la vitesse respective en actionnant la fourchette de boîte associée, ledit moyen formant actionneur (8) incluant un moyen de sélection de vitesse (7) et au moins un moyen de déplacement de tige de changement de vitesse (9) indépendant, et
- un moyen de commande (10) destiné à commander l'action dudit moyen de sélection de vitesse (7) et dudit moyen de déplacement (9) de tige de changement de vitesse, étant **caractérisé par**
- un agencement de trois encoches (29) ménagées dans le carter (13) afin de verrouiller la fourchette de boîte respective (3 à 6) dans la position de changement de vitesse sélectionnée ou dans la position neutre centrale par rapport au carter (13).

2. Dispositif de changement de vitesse selon la revendication 1, **caractérisé en ce que** ledit moyen de sélection de vitesse (7) inclut une pluralité d'unités de sélection de vitesse (7A à 7D) comprenant chacune un piston mobile (23) coopérant avec un levier d'actionnement (11) qui peut pivoter et qui actionne une broche de verrouillage (14) afin d'accoupler la fourchette de boîte respective (3 à 6) à ladite tige de changement de vitesse (2).

3. Dispositif de changement de vitesse selon la revendication 2, **caractérisé en ce que** ledit piston (10) est actionné par un électro-aimant (12) ou par un moyen d'entraînement hydraulique ou pneumatique.

4. Dispositif de changement de vitesse selon la revendication 2 ou 3, **caractérisé en ce que** ledit levier d'actionnement (11) est supporté avec une possibilité de pivotement dans ledit carter (13).

5. Dispositif de changement de vitesse selon l'une des revendications 2 a 4, **caractérisé en ce que** ladite broche de verrouillage (14) est sollicitée par un ressort (15) dans la position de non verrouillage.

6. Dispositif de changement de vitesse selon l'une des revendications 2 à 4, **caractérisé en ce que** chaque broche de verrouillage (14) comprend une protubérance (16) destinée à immobiliser temporairement la fourchette de boîte respective (3 à 6) par rapport au carter (13).

7. Dispositif de changement de vitesse selon l'une des revendications 2 à 4, **caractérisé en ce que** chaque broche de verrouillage (14) est guidée dans la fourchette de boîte respective (3 à 6).

8. Dispositif de changement de vitesse selon l'une des revendications 1 à 7, **caractérisé en ce que** ladite tige de changement de vitesse (2) comprend une pluralité de rainures (17 à 20) correspondant au nombre de broches de verrouillage (14), et **en ce qu'**elles sont situées de telle sorte à être conçues pour coopérer avec ladite broche de verrouillage (14).

9. Dispositif de changement de vitesse selon l'une des revendications 1 à 8, **caractérisé en ce que** ledit moyen de déplacement (9) de tige de changement de vitesse est positionné à proximité de la face avant (21) de ladite tige de changement de vitesse (2).

10. Dispositif de changement de vitesse selon l'une des revendications 1 a 9, **caractérisé en ce que** ledit moyen de déplacement (9) de tige de changement de vitesse est un électro-aimant, un moyen d'entraînement hydraulique ou pneumatique.
